# EUROPEAN PATENT SPECIFICATION

(11) **EP 1 539 513 B1**
(45) Date of publication and mention of the grant of the patent: **28.02.2007**
(21) Application number: 03797772.5
(22) Date of filing: 17.09.2003
(51) Int. Cl.: B60F 1/04

(54) **A VEHICLE ADAPTED FOR DIFFERENT DRIVING MODES, AND A METHOD OF DRIVING SUCH VEHICLES**
FÜR VERSCHIEDENE FAHRMODI AUSGEFÜHRTES FAHRZEUG UND VERFAHREN ZUM FAHREN SOLCHER FAHRZEUGE
VEHICULE CONVERTIBLE RAIL/ROUTE, ET SON MODE DE CONDUITE

(30) Priority: 19.09.2002 SE 0202776
(43) Date of publication of application: 15.06.2005
(73) Proprietor: AB Sjölanders Smides-Och Mekaniska Verkstad, 283 23 Osby (SE)
(72) Inventor: SJÖLANDER, Jan-Erik, S-283 35 Osby (SE)
(74) Representative: Estreen, Lars J.F.
(86) International application number: PCT/SE2003/001438
(87) International publication number: WO 2004/026600

(56) References cited:
- WO-A2-02/051657
- US-A- 2 188 096
- US-A- 4 048 925
- US-A- 4 103 622

## Description

### FIELD OF THE INVENTION

The present invention relates to a so-called semitrailer and more specifically to a semitrailer of the kind defined in the preamble of Claim 1.

Prior publications SE,B,7506711-6 (Publication No. 402 343) (Storm) and its American counterpart U.S.-A 4,048,925 teach a vehicle that can be driven on roads and on railroad tracks.

A lighter vehicle of the transport van type or some similar vehicle that can be driven on both a road surface and a railway track is described in SE,C,9401479-2 (Publication No. 502 692) (SRS et al).

Hitherto, it has not been considered possible to equip really large and heavy vehicles of the semitrailer type for driving on both road surfaces and railroad lines.

The semitrailer is normally coupled to the traction vehicle via a device that includes a vertical swivel shaft of "turntable"/"kingpin" type. Different types of more or less standardised traction vehicles are used, providing that the vehicle used, and then particularly the so-called kingpin or swivel shaft, is able to cope with the load carried by a semitrailer.

These difficulties have been associated, *inter alia,* with the belief that the large length of the vehicle and the load-take-up kingpin between traction vehicle and trailer would make it impossible to convert the vehicle between different driving modes, particularly to a mode in which the vehicle can be driven on railroad tracks. In addition, the double wheel setup of the traction vehicle causes special problems. However, the present invention offers a way of overcoming these difficulties in a simple manner.

### OBJECT OF THE INVENTION

Accordingly, a main object of the invention is to provide a very long and heavy road vehicle of the semitrailer type with elements necessary for enabling the vehicle to be converted to a railroad driving mode. Another object is to facilitate driving of the semitrailer onto a railroad track.

### SUMMARY OF THE INVENTION

The first mentioned object is fulfilled by an inventive vehicle of the aforesaid kind, which includes the features set forth in the characterising clause of Claim 1.

The invention is based on the insight that the vertical force-take-up kingpin or swivel axle by means of which the trailer part of the vehicle is connected to said traction vehicle can be used for driving the vehicle onto the railroad track in conjunction with converting the vehicle to its railroad mode and also in conjunction with driving the vehicle from the railroad track when the vehicle shall be converted back to its road driving mode. Thus, it is sufficient to equip solely the semitrailer with a vertically movable rail-wheel unit at each end of the trailer. In this regard, the semitrailer can be released from the traction vehicle in conjunction with driving the semitrailer onto the railroad track and, in conjunction therewith, to move the front vertically movable rail-wheel unit of the semitrailer in said release operation.

The traction vehicle need not be equipped for track-bound operation, but can be used for other purposes when using the semitrailer for the transportation of goods on a railroad system.

In many instances, it is convenient when at least one of the rail-wheel units is comprised of a bogie that includes two rail-wheel axles.

However, one or both rail-wheel units may comprise a unit that has a single axle. When the rear-wheel unit is a single-axle unit, it may be convenient for the unit to be equipped with an outwardly swingable support element having an axle which carries an additional rail wheel for engagement with the rails of the track when driving the vehicle onto the track.

At least one of the rail-wheel units may include a drive motor for driving the semitrailer on the track. According to another embodiment, which is important in principle, both rail-wheel units lack such drive means. Reversal of the trailer onto the track is achieved with the aid of the traction vehicle, while track-bound traffic is dealt with with the aid of a separate railroad engine or some other pulling vehicle.

It is also possible to connect together two or more semitrailers to form a "trailer train" for driving on the railroad system in one or the other of said methods, depending on what is required of the vehicle driven on the railroad system.

All axles may thus be non-driven, so-called "running axles" or one or more axles may, alternatively, be driven. The axles may be both non-braked and braked depending on the requirements applying to types of vehicle to be used on the railroad system.

The front rail-wheel unit may be fixed in its position parallel with the track.

In order to be able to drive the vehicle onto and off the railroad track, it is necessary that the rear rail-wheel unit is able to swing about a vertical shaft, although means may be provided which enable the wheel unit to be fixed in its use position, parallel with the track.

There is normally required a level crossing approximately at the level of the upper edge of the track, in conjunction with driving the semitrailer onto and off the railroad track.

The invention also relates to a method of driving a semitrailer of the aforesaid kind onto a railroad track with the aid of a traction vehicle, for railroad operation. The inventive method comprises essentially the method steps set forth in Claim 8.

The semitrailer located on the railroad track can be coupled to a drive vehicle located on said track or secured, e.g., with the aid of brake shoes or chocks, before the traction vehicle is disconnected and driven away. A railway engine of the aforesaid kind can be dispensed with when one of the rail-wheel units includes a drive means. The means for operating brakes and for driving the vehicle may be placed on the semitrailer or on a separate track-bound unit.

Two or more semitrailers may be placed sequentially on the railroad track and connected together to form a "train".

The vehicle is removed from the railroad track by carrying out the method steps in the reverse order.

Further characteristic features of the invention will be apparent from the following description of preferred embodiments thereof, this description being made with reference to the accompanying drawings.

### BRIEF DESCRIPTION OF THE DRAWINGS

Fig. 1 is a side view of a so-called semitrailer according to the invention, adapted for road driving.
Fig. 2 is a side view of the semitrailer shown in Fig. 1, intended for track-bound driving, with the traction vehicle disconnected.

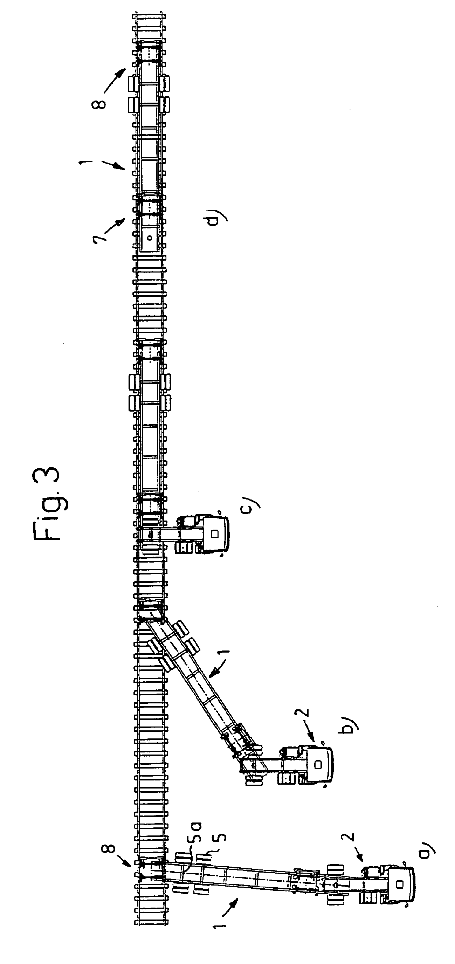

Sections a, b, c and d of Fig. 3 are plan views showing adjustments from a road driving mode to a railroad driving mode in conjunction with driving the semitrailer up onto a railroad track.

### DESCRIPTION OF PREFERRED EMBODIMENTS

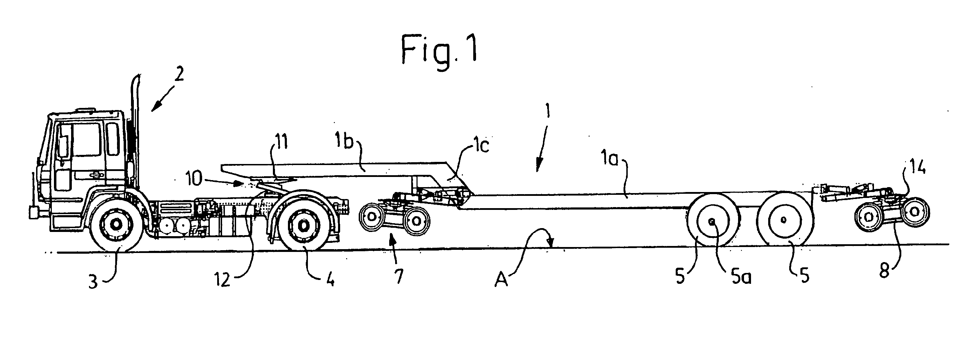

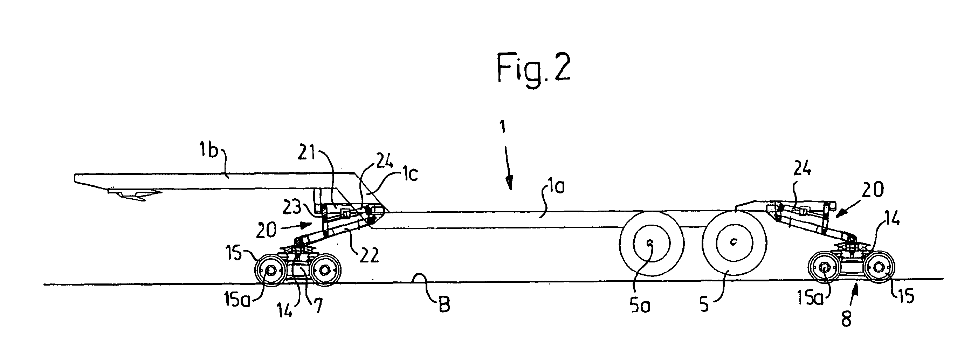

Fig. 1 illustrates a semitrailer 1 and a traction vehicle 2 intended for driving on a road surface A. Fig. 2 shows the semitrailer I disconnected from the traction vehicle and adapted for driving on a railroad track B.

The semitrailer 1 has a loading platform 1a and a front part Ib provided with a swivel plate 11, which forms a part of the pivotal force take-up coupling device 10 that couples the semitrailer 1 and the traction vehicle 2 together.

In the illustrated embodiment, the coupling device on the traction vehicle is a so-called kingpin 12. A coupling device 10 of this nature is able to take-up the load on the semitrailer in the performance of its various tasks.

The rear part of the semitrailer 1 is provided with road wheels 5 carried on wheel axles 5a. The semitrailer also includes a front and a rear rail-wheel unit 7, 8 which, in the illustrated embodiment, each have the form of a bogie and each include two wheel axles 15a carrying rail wheels 15. The rear rail-wheel unit 8 is disposed behind the road wheels 5, while the front rail-wheel unit 7 is disposed in the region 1c between the load-carrying platform portion la and the front part 1b of the semitrailer, i.e. behind the swivel plate 11 of the semitrailer functioning as a coupling part.

At least the rear rail-wheel unit 8 can be swung about a vertical shaft 14, which may also apply to the front rail-wheel unit 7. However, the front-wheel unit 7 is normally fixed in a position parallel with the longitudinal axis of the semitrailer and the railroad track B, respectively. Both rail-wheel units 7, 8 can be moved vertically for the purpose of placing the rail-wheels onto the rails while lifting the semitrailer, such that the rear road wheels 5 will be lifted over the upper edge of the railroad track and also so that the swivel plate 11 will release its coupling engagement with the coupling part on the traction vehicle, this latter coupling part being referred to as a kingpin in the illustrated case.

Lifting of a bogie unit 7, 8 from the track and placing of said bogie unit on said track are effected with the aid of a device 20 whose major part includes a fixed horizontal arm or jib 21, a pivotal bar 22, a pivotal link element 23 located between the arm and the bar, and a pivotally mounted hydraulic ram 24 which engages the central part of said link element and which is mounted at the opposite end of the trailer.

A comparison made between Figs. 1 and 2 will make evident the movements carried out by the various elements between lifting the bogie units 7, 8 and placing said units on the railroad track B.

Either one of the bogie units 7, 8, or both of said bogie units, may, alternatively, comprise units provided with a single axle and conveniently including an outwardly pivotal rail-equipped support element that can be fixed in its use position.

Fig. 3 illustrates various phases connected with driving the semitrailer onto the railroad track, for conversion of the semitrailer from its road traffic mode to its railroad mode.

Fig. 3a) illustrates the complete vehicle, in other words shows the traction vehicle 2 and the semitrailer 1 coupled thereto being driven up to and over the "level crossing" or corresponding junction to be used. When essentially the entire vehicle has passed over the track, or has been reversed onto the track, the vehicle is aligned so that the semitrailer 1 will define an angle with the track in the on-driving direction, said angle being greater than 90°, and so that the rail-wheel unit 8, i.e. at the bogie shown in the illustrated embodiment, is located over the track. The bogie 8 is then lowered onto the track.

Downward movement is continued until the rubber wheels 5 of the semitrailer have been raised from the ground to an extent at which they are situated above the upper edge of the rail.

Fig. 3b) shows that the traction vehicle 2 is reversed towards the track at an angle relative to the semitrailer 1 such that the bogie will move along the track in the on-driving direction.

Fig. 3c) illustrates a position in which the traction vehicle has "pushed or shoved" a semitrailer to an extent at which it is located parallel with the track. In this position, the front rail-wheel unit 7 is pressed down against the track. Downward movement is continued to an extent at which the semitrailer 1 is released from the traction vehicle in the region of the articulated coupling 10.

If the semitrailer has rail wheels that are not braked, the semitrailer shall be coupled to a vehicle (not shown) present on the railroad tracks when in this position, or secured with the aid of chocks (not shown) before disconnecting the traction vehicle, i.e. raised so that the coupling part 11 belonging to the semitrailer and forming part of the coupling device 10 is released.

The traction vehicle 1 is then driven away, wherewith the semitrailer according to Fig. 3d) and Fig. 2 respectively is adapted to its railroad track mode and, e.g., can be coupled to a railroad engine or, alternatively, can be driven by drive means provided in one of the rail-wheel units 7, 8.

The drive means for both brake shoes and for driving the vehicle may either be placed on the semitrailer or on some other track-bound vehicle.

Two or more semitrailers can be placed sequentially on the track and coupled together to form a "train".

The semitrailer is removed from the railroad track by carrying out the steps shown in Fig. 3a)-d) in the reverse order.

## Claims

1. A semitrailer including a loading platform (1a) and having at least one wheel axle (5a) carrying a road wheel (5), and a front part (1b) that includes a coupling part (11) for articulated connection to a traction vehicle (2), about a vertical axle, **characterised in that** the trailer (1) includes a vertically movable rail-wheel unit (8) which can be swung about a vertical axle (14) and which has at least one axle (15a) which carries a rail wheel (15), the trailer (1) having at its front part (1b) behind the coupling part (11) a vertically movable second rail-wheel unit (7) having at least one axle (15a) carrying rail wheels (15).

2. A semitrailer according to Claim 1, **characterised in that** at least one of the rail-wheel units (7, 8) is a bogie that has two rail-wheel axles (5a).

3. A semitrailer according to Claim 1 or to, **characterised in that** at least one rail-wheel unit, preferably such a unit that includes a single axle, is provided with an outwardly pivotal support element that includes an axle and a further rail wheel for engagement with the rails of the railroad track when driving the semitrailer onto said track.

4. A semitrailer according to any one of Claims 1-3, **characterised in that** at least one of the two rail-wheel units (7, 8) includes a drive motor for driving at least one rail-wheel axle.

5. A semitrailer according to any one of Claims 1-3, **characterised in that** both rail-wheel units (7, 8) lack drive means.

6. A semitrailer according to any one of the preceding Claims, **characterised in that** the front rail-wheel unit (7) is fixed in its position parallel with the railroad track.

7. A semitrailer according to any one of the preceding Claims, **characterised in that** the rear rail-wheel unit (8) can be fixed in a position parallel with said railroad track.

8. A method of driving a semitrailer (1) according to Claim 1 onto a railroad track (B) with the aid of a traction vehicle (2) for conversion of said semitrailer to a railroad driving mode, **characterised by** the steps of
a) moving the traction vehicle (2) and the semitrailer (1), either forwards or backwards, up to and over a level crossing that is to be used;
b) aligning the semitrailer (1) so as to define an angle with the railroad track (B) in the level crossing, said angle being greater than 90°, such that the rear rail-wheel unit (8) will lie over the track;
c) lowering the rear rail-wheel unit (8) down onto the track;
d) continuing said downward movement until the road wheels (5) of the semitrailer are raised above the upper edge of the track;
e) reversing the traction vehicle (2) towards the track at an angle relative to the semitrailer (1) such as to cause the rear rail-wheel unit (8) to move along the track; and
f) when the semitrailer is in a position in which it is parallel with the track, the front rail-wheel unit (7) is lowered into contact with the track and the downward movement is continued to an extent at which the front coupling part (11) on the semitrailer will be disengaged from its co-acting coupling part (12) on the traction vehicle (2).

9. A method according to Claim 8, **characterised by** coupling the semitrailer to a drive vehicle, e.g. a railroad engine, present on the railroad track, or securing the semitrailer, e.g. with the aid of brake shoes (chocks) before disconnecting the traction vehicle (2) and driving said vehicle away.

10. A method according to Claim 8 or 9, **characterised by** placing two or more semitrailers sequentially on the railroad track and coupling said semitrailers together to form a train.

## Patentansprüche

1. Sattelanhänger mit einer Ladebühne (1a), der mindestens eine ein Straßenrad (5) tragende Radachse (5a) aufweist, und mit einem vorderen Teil (1 b), der einen Kupplungsteil (11) zur Sattelverbindung mit einem Zugfahrzeug (2) um eine vertikale Achse aufweist, **dadurch gekennzeichnet, dass** der Anhänger (1) eine vertikal bewegliche Schienen-Rad-Einrichtung (8) umfasst, die um eine vertikale Achse (14) geschwenkt werden kann und die mindestens eine Achse (15a) aufweist, die ein Schienenrad (15) trägt, wobei der Anhänger (1) an seinem vorderen Teil (1 b) hinter dem Kupplungsteil (11) eine vertikal bewegliche zweite Schienen-Rad-Einrichtung (7) mit mindestens einer Schienenräder (15) tragenden Achse (15a) aufweist.

2. Sattelanhänger nach Anspruch 1, **dadurch gekennzeichnet, dass** mindestens eine der Schienen-Rad-Einrichtungen (7, 8) ein Drehgestell ist, das zwei Schienen-Rad-Achsen (5a) aufweist.

3. Sattelanhänger nach Anspruch 1 oder 2, **dadurch gekennzeichnet, dass** mindestens eine Schienen-Rad-Einrichtung, bevorzugt eine solche Einrichtung, die eine einzige Achse umfasst, mit einem auswärts schwenkbaren Lagerelement versehen ist, das eine Achse und ein weiteres Schienen-Rad zum Eingriff mit den Schienen des Eisenbahngleises bei Fahren des Sattelanhängers auf dem Eisenbahngleis aufweist.

4. Sattelanhänger nach einem der Ansprüche 1 - 3, **dadurch gekennzeichnet, dass** mindestens eine der Schienen-Rad-Einrichtungen (7, 8) einen Antriebsmotor zum Antreiben mindestens einer Schienen-Rad-Achse aufweist.

5. Sattelanhänger nach einem der Ansprüche 1 - 3, **dadurch gekennzeichnet, dass** beiden Schienen-Rad-Einrichtungen (7, 8) Antriebsmittel fehlen.

6. Sattelanhänger nach einem der vorhergehenden Ansprüche, **dadurch gekennzeichnet, dass** die vordere Schienen-Rad-Einrichtung (7) in ihrer Stellung parallel zu dem Eisenbahngleis fixiert ist.

7. Sattelanhänger nach einem der vorhergehenden Ansprüche, **dadurch gekennzeichnet, dass** die hintere Schienen-Rad-Einrichtung (8) in einer Stellung parallel zu dem Eisenbahngleis fixiert werden kann.

8. Verfahren zum Fahren eines Sattelanhängers (1) nach Anspruch 1 auf ein Eisenbahngleis (B) mit Hilfe eines Zugfahrzeugs (2) zur Umwandlung des Sattelanhängers zu einer Eisenbahngleis-Fahrbetriebsart, **gekennzeichnet durch** die Schritte des:
a) Bewegens des Zugfahrzeugs (2) und des Sattelanhängers (1) entweder vorwärts oder rückwärts, bis zu und über einen zu verwendenden Bahnübergang;
b) Ausrichtens des Satttelanhängers (1) zum Bilden eines Winkels mit dem Eisenbahngleis (B) in dem Bahnübergang, wobei der Winkel größer als 90° ist, so dass die hintere Schienen-Rad-Einrichtung (8) über dem Gleis liegt;
c) Absenkens der hinteren Schienen-Rad-Einrichtung (8) nach unten auf das Gleis;
d) Fortsetzens der Abwärtsbewegung, bis die Straßenräder (5) des Sattelanhängers über der Oberkante des Gleises angehoben sind;
e) Umkehrens des Zugfahrzeugs (2) hin zu dem Gleis bei einem Winkel zu dem Sattelanhänger (1), so dass die hintere Schienen-Rad-Einrichtung (8) veranlasst wird, sich entlang des Gleises zu bewegen; und
f) wenn sich der Sattelanhänger in einer Position befindet, in der er parallel zu dem Gleis ist, Absenken der vorderen Schienen-Rad-Einrichtung (7) in Kontakt mit dem Gleis und Fortsetzen der Abwärtsbewegung solange, bis der vordere Kupplungsteil (11) an dem Sattelanhänger von seinem zusammen wirkenden Kupplungsteil (12) an dem Zugfahrzeug (2) gelöst wird.

9. Verfahren nach Anspruch 8, **gekennzeichnet durch** Ankuppeln des Sattelanhängers an ein Antriebsfahrzeug, z.B. eine Eisenbahnlokomotive, das auf dem Eisenbahngleis vorhanden ist, oder Befestigen des Sattelanhängers, z.B. mit Hilfe von Bremsbacken (Klötzen), vor Abkoppeln des Zugfahrzeugs (2) und Wegfahren des Fahrzeugs.

10. Verfahren nach Anspruch 8 oder 9, **gekennzeichnet durch** Positionieren von zwei oder mehr Sattelanhängern hintereinander auf dem Eisenbahngleis und Verbinden der Sattelanhänger miteinander, um einen Zug zu bilden.

## Revendications

1. Semi-remorque comprenant une plateforme de chargement (1a) et ayant au moins un essieu de roue (5a) supportant une roue routière (5), et une partie avant (1b) qui comprend une partie de couplage (11) pour le raccordement articulé à un véhicule de traction (2), autour d'un essieu vertical, **caractérisée en ce que** la remorque (1) comprend une unité roue-rail (8) mobile verticalement qui peut être pivotée autour d'un essieu vertical (14) et qui a au moins un essieu (15a) qui supporte une roue de rail (15), la remorque (1) ayant au niveau de sa partie avant (1b) derrière la partie de couplage (11) une seconde unité roue-rail (7) mobile verticalement ayant au moins un essieu (15a) supportant des roues de rail (15).

2. Semi-remorque selon la revendication 1, **caractérisée en ce que** l'une au moins des unités rail-roue (7, 8) est un bogie qui a deux essieux roue-rail (5a).

3. Semi-remorque selon la revendication 1, **caractérisée en ce qu'**au moins une unité roue-rail, de préférence une telle unité comprenant un essieu unique, est pourvue d'un élément de support pivotant vers l'extérieur qui comprend un essieu et une autre roue de rail pour mise en prise avec les rails de la voie ferrée lorsque l'on entraîne la semi-remorque sur ladite voie.

4. Semi-remorque selon l'une quelconque des revendications 1 à 3, **caractérisée en ce qu'**au moins l'une des deux unités roue-rail (7, 8) comprend un moteur d'entraînement pour entraîner au moins un essieu roue-rail.

5. Semi-remorque selon l'une quelconque des revendications 1 à 3, **caractérisée en ce que** les deux unités roue-rail (7, 8) sont dépourvues de moyen d'entraînement.

6. Semi-remorque selon l'une quelconque des revendications précédentes, **caractérisée en ce que** l'unité roue-rail avant (7) est fixe en sa position parallèle à la voie ferrée.

7. Semi-remorque selon l'une quelconque des revendications précédentes, **caractérisée en ce que** l'unité roue-rail arrière (8) peut être fixe en une position parallèle à ladite voie ferrée.

8. Procédé pour conduire une semi-remorque (8) selon la revendication 1 sur une voie ferrée (B) à l'aide d'un véhicule de traction (2) pour la conversion de ladite semi-remorque en mode de conduite sur voie ferrée, **caractérisé par** les étapes consistant à :
a) déplacer le véhicule de traction (2) et la semi-remorque (1), en avant ou bien en arrière, jusqu'à et au-delà d'un passage à niveau à utiliser ;
b) aligner la semi-remorque (1) afin de définir un angle avec la voie ferrée (B) dans le passage à niveau, ledit angle étant supérieur à 90°, de sorte que l'unité arrière roue-rail (8) se trouve sur la voie ferrée ;
c) abaisser l'unité arrière roue-rail (8) jusque sur la voie ;
d) continuer ledit mouvement descendant jusqu'à ce que les roues routières (5) de la semi-remorque soient soulevées au-dessus du bord supérieur de la voie ;
e) inverser le véhicule de traction (2) vers la voie avec un angle par rapport au semi-remorque (1) afin d'amener l'unité arrière roue-rail (8) à se déplacer le long de la voie ; et
f) lorsque la semi-remorque est dans une position parallèle à la voie, l'unité roue-rail avant (7) est abaissée jusqu'au contact de la voie et le mouvement descendant est poursuivi sur une amplitude telle que la partie de couplage avant (11) du semi-remorque soit dégagée de sa partie de couplage coopérante (12) du véhicule de traction (2).

9. Procédé selon la revendication 8, **caractérisé par** le fait de coupler la semi-remorque à un véhicule d'entraînement, par exemple une machine ferroviaire, présent sur la voie ferrée, ou de fixer la semi-remorque, par exemple à l'aide de segments de frein (sabots d'arrêt) avant de déconnecter le véhicule de traction (2) et d'éloigner ledit véhicule à distance.

10. Procédé selon la revendication 8 ou 9, **caractérisé par le fait que** l'on place deux semi-remorques ou plus en succession sur la voie ferrée et que l'on couple ensemble lesdites semi-remorques pour former un train.
